# EUROPEAN PATENT SPECIFICATION

(11) **EP 1 939 250 B1**
(45) Date of publication and mention of the grant of the patent: **30.11.2011**
(21) Application number: 06027117.8
(22) Date of filing: 29.12.2006
(51) Int. Cl.: C08L 23/06

(54) **Polyethylene composition for blow moulded transport packaging articles**
Polyethylenmassen für blasgeformte Transportverpackungsartikel
Composition à base de polyéthylène pour le moulage par soufflage d'articles d'emballage de transport

(43) Date of publication of application: 02.07.2008
(73) Proprietor: Borealis Technology Oy, 06101 Porvoo (FI)
(72) Inventor: Johansen, Geir Morten, 3943 Porsgrunn (NO); Van Damme, Jean Paul, 1350 Orp-Jauche (BE)
(74) Representative: Kador & Partner

(56) References cited:
- EP-A- 1 460 105
- EP-A1- 1 655 338
- WO-A-00/40620
- WO-A-03/102075
- WO-A-2004/048468
- WO-A-2006/045550
- US-A1- 2006 047 076

## Description

The present invention relates to a polyethylene composition for blow moulded articles, in particular for transport packaging, houseware and thin wall packaging applications, preferably of less than 2 litres volume. Furthermore, the present invention relates to blow moulded articles comprising said composition and to the use of said composition for the production of blow moulded articles.

Blow moulding is a manufacturing process by which hollow plastic parts can be formed. In this process a plastic tubular form, produced by either extrusion or injection moulding, is used to form the part. This form, called a parison, is softened inside a mould and then injected with air or another compressed gas. This expands the parison against the sides of the mould cavity, forming a hollow object with the size and shape of the mould. Blow moulding is often used to produce plastic vessels and containers.

Blow moulding thus serves to make a wide variety of articles of different sizes and shapes, in particular containers or vessels such as fluid-containing plastic bottles. Compared to injection moulding, blow moulding is a low pressure process, with typical blow air pressures of 150 to 1000 kPa. This low pressure process allows the production of economical low-force clamping stations, while parts can still be produced with surface finishes ranging from high gloss to textured. The resulting low stresses in the moulded parts also help make the containers resistant to strain and environmental stress cracking.

The requirements for the polymer compositions subjected to the blow moulding process are often centred around the aspects of composition processability and sufficient stiffness of the hollow articles produced. By using compositions with a higher rigidity, the wall thickness of the hollow moulded articles can be reduced, thus saving polymer mass per unit area and production/transportation costs due to e.g. bottles of lighter weight.

Furthermore, ideally, both processability and stiffness should be achieved together. However, improving polymer flow and thus processability can yield products with a lower stiffness and poorer impact properties. This is unacceptable for blow moulded articles made for applications such as packaging or plastic bottles, where stiffness is important.

On the other hand, compositions with a higher tensile modulus (i.e. stiffness) are frequently inadequate in extrusion and blow moulding performance. The necessity of higher processing temperatures or pressures ultimately leads to fewer articles being produced per time unit and thus the article processing productivity is decreased.

An indicator for a superior processability is the die swell. If the die swell is reduced then the generation of thinner walled and lighter containers is facilitated. The composition with a reduced die swell will be easier to blow mould and will enable high throughputs while yielding products of superior quality and lower weight.

The state of the art document EP 570 051 A1 discloses a method for ethylene homopolymerisation in two polymerisation stages in the presence of a catalyst comprising bis(cyclopentadienyl)chromium.

Furthermore, bimodal high density ethylene polymers (HDPE) are known from WO 0 071 615 A1 for injection moulding. The products produced have an improved environmental stress cracking resistance (ESCR). However, at least one of the polyethylene components must be an ethylene copolymer.

EP 783 022 A1 discloses bimodal HDPE blends for various moulding methods including blow moulding. Both the high molecular weight component and the low molecular weight component were produced using a metallocene catalyst.

Furthermore, EP 1 655 338 discloses a bimodal homopolymer made using a MgCl₂ supported Ti containing catalyst. The polymer is employed in injection moulded articles and has a higher MFR₂ compared to the current invention.

EP 1 525 260 deals with a bimodal HDPE copolymer compositions for moulded milk bottles. Accordingly, the use of copolymers can improve the ESCR in the polymer.

Thus, there remains a need for a ethylene polymer composition suitable for the use in blow moulding, in particular for thin walled hollow applications, which provides a combination of superior processing properties and hence allows for increased productivity (output), but at the same time shows excellent mechanical properties including product stiffness. In particular, the composition should achieve a low die swell during extrusion and thus facilitate thin-walled article production.

Surprisingly, it was found that a polyethylene composition of two polymer fractions, which displays simultaneously a low MFR₂ and a high elasticity balance, gave rise to a composition, which not only has excellent rheological/processing attributes, but also good mechanical properties, such as increased stiffness of the derived blow moulded products. Thus, the invention describes a solution that surprisingly is superior in both these attributes compared to the prior art.

The present invention provides a polyethylene composition comprising
A polyethylene composition comprising
(i) a first ethylene homopolymer fraction (A), and
(ii) a second ethylene homopolymer fraction (B),
wherein
(I) either fraction (A) and/or fraction (B) is an ethylene homopolymer with less than 0.3 mol% of a comonomer,
(II) fraction (A) has a lower average molecular weight than fraction (B), measured by a method based on ISO 16014-4:2003,
(III) fraction (A) has a MFR₂ of greater than or equal to 50 g/10min, determined according to ISO 1133,
(IV) fraction (B) has a MFR₂ of less than 50 g/10min, determined according to ISO 1133,
wherein said polyethylene composition has
(a) a MFR₂ of less than or equal to 3.0 g/10min, determined according to ISO 1133, and
(b) an elasticity balance (tan_{(0.05)}/tan₍₃₀₀₎) of greater or equal to 2.8,
(c) a density of 960kglm³ or higher, measured according to ISO 1183/D, and
(d) a molecular weight distribution MWD of 1:0 to 30, measured by a method based on ISO 16014-4:2003.

It has been found that the polyethylene compositions according to the invention provide a improved material suited for blow moulding, in particular for transport packaging and hollow thin walled applications, which combines very good processing properties with excellent mechanical properties, such as high stiffness. Due to the excellent processing properties of the compositions, a higher blow moulding production throughput can be reached. This manifests itself e.g. in a higher plastic bottle production rate. Accordingly, the number of bottles manufactured per minute on a dual Graham wheel machine could be increased. In addition, less back pressure on the extruder was required during the blow moulding stage.

By ethylene homopolymer is meant a polymer, the greater majority by weight of which derives from ethylene monomer units. The comonomer contribution to the homopolymer is more preferably less than 0.1 mol% and most preferably less than 0.01 mol%.

Fractions (A) and (B) may alternatively either or both be ethylene copolymers, however, preferably fractions (A) and (B) are ethylene homopolymers.

The weight average molecular weight Mw of the composition preferably is at least 100,000 kD, more preferably at least 130,000 kD, and most preferably at least 145,000 kD.

Furthermore preferably, the first fraction (A) is present in 20 to 80 wt.%, most preferably 40 to 60 wt%, and/or the second fraction (B) is present in 80 to 20 wt.%, most preferably 60 to 40 wt.%, based on the total weight of the polyethylene composition.

In the following, the preferred features of the polyethylene composition according to the invention are described.

The polyethylene composition has a MFR₂ of preferably less than or equal to 1.5 g/10min, even more preferred less than 1.0 g/10min, most preferably less than or equal to 0.85 g/10min.

By preference, fraction (A) has a MFR₂ of less than or equal to 500 g/10min, preferably less than 200 g/10min, preferably from 30 to 500 g/10min, more preferably from 50 to 500 g/10min, most preferably from 80 to 200 g/10min. Preferably, fraction (B) has an MFR₂ of greater than or equal to 0.01 g/10min, more preferably from 0.03 to 2.0 g/10min, even more preferably from 0.06 to 1.00 g/10min, and most preferably from 0.08 to 0.8 g/10min.

In addition it is preferred that the MFR₂₁ of the composition is greater or equal to 4 g/10min and preferably from 50 to 100 g/10min.

Further, the polyethylene composition has a density of most preferably of greater or equal to 964 kg/m³. Preferably, both fraction (A) and fraction (B) is an ethylene homopolymer with a density of at least 965 kg/m³.

It is particularly preferred that the polyethylene composition is multimodal with regard to its molecular weight distribution curve, preferably it is bimodal.

Usually, a polyethylene composition comprising at least two polyethylene fractions, which have been produced under different polymerisation conditions resulting in different (weight average) molecular weights and molecular weight distributions for the fractions, is referred to as "multimodal". Accordingly, in this sense the compositions of the invention are multimodal polyethylenes. The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The inventive composition has a molecular weight distribution MWD of 10 to 30. The polyethylene composition preferably has a molecular weight distribution MWD, being the ratio of the weight average molecular weight M_{w} and the number average molecular weight Mₙ, Furthermore, the composition preferably has an MWD of 20 or less.

The polyethylene composition may also contain minor quantities of additives such as pigments, nucleating agents, antistatic agents, fillers, antioxidants, generally in amounts of up to 10 % by weight, preferably up to 5 % by weight.

It is further preferred that the polyethylene composition has a shear thinning index SHI_{(2.7/210)} of greater or equal to 30, more preferably greater or equal to 32. The shear thinning index is correlated to the MWD of the polymer composition, but independent of molecular weight.

Also preferably, the elasticity balance (tan(0.05)/tan(300)) of the polyethylene composition is greater or equal to 3.0, preferably greater or equal to 4.0. The tan 300 and tan 0.05 at higher and lower shear rates reflect the elasticity balance. The tan(300) is the tan(delta) at 300 rad/s and the tan(0.05) is the tan(delta) at 0.05 rad/s (measured as described below).

In addition, preferably the die swell is less than or equal to 1.8 mm, more preferably less than or equal to 1.66 mm. The die swell characterises the shape memory effect of a polymer material after die extrusion and thus is an important processing parameter. A lower die swell indicates a lesser inclination of the polymer material to return to its original topography prior to extrusion. Longer machine dies or higher extrusion temperatures serve to wipe out the memory effect, but die swell is also dependent on the structural features of the polymer itself.

A polyethylene composition according to any of the previous claims, wherein preferably the tensile modulus is greater of equal to 1300 MPa, preferably is greater or equal to 1400 MPa, more preferably is greater or equal to 1500 MPa, even more preferably is greater or equal to 1600 MPa. The stiffness as denoted by the E-modulus of specimens and products derived from the inventive composition was very high. This effect is particularly useful for the applications as described, because the amount of material necessary to achieve the required stability and rigidity in the end applications can be reduced if the stiffness is higher.

Where herein features of fractions (A) and/or (B) of the composition of the present invention are given, these values are generally valid for the cases in which they can be directly measured on the respective fraction, e.g. when the fraction is separately produced or produced in the first stage of a multistage process.

However, the composition may also be and preferably is produced in a multistage process wherein e.g. fractions (A) and (B) are produced in subsequent stages. In such a case, the properties of the fractions produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

A multimodal (e.g. bimodal) polyethylene as hereinbefore described may alternatively be produced by mechanical blending two or more polyethylenes (e.g. monomodal polyethylenes) having differently centred maxima in their MWDs. The blending may be carried out in any conventional blending apparatus.

The monomodal polyethylenes required for blending may be available commercially or may be prepared using any conventional procedure known to the skilled man in the art. Each of the polyethylenes used in a blend and/or the final polymer composition may have the properties hereinbefore described for the lower molecular weight component, higher molecular weight component and the composition, respectively.

It is further preferred that one of the fractions (A) and (B) of the polyethylene composition, preferably fraction (A), is produced in a slurry reaction, preferably in a loop reactor, and one of the fractions (A) and (B), preferably fraction (B), is produced in a gas-phase reaction.

Preferably, the multimodal polyethylene composition may be produced by polymerisation using conditions which create a multimodal (e.g. bimodal) polymer product, e.g. using a catalyst system or mixture with two or more different catalytic sites, each site obtained from its own catalytic site precursor, or using a two or more stage, i.e. multistage, polymerisation process with different process conditions in the different stages or zones (e.g. different temperatures, pressures, polymerisation media, hydrogen partial pressures).

Preferably, the multimodal (e.g. bimodal) composition is produced by a multistage ethylene polymerisation, e.g. using a series of reactors, with optional comonomer addition preferably in only the reactor(s) used for production of the higher/highest molecular weight component(s) or differing comonomers used in each stage. A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g. gas-phase, slurry phase, liquid phase polymerisations, using conventional reactors, e.g. loop reactors, gas phase reactors, batch reactors. (see for example WO 97/44371 and WO 96/18662).

Polymer compositions produced in a multistage process are also designated as "in-situ"-blends. Accordingly, it is preferred that fractions (A) and (B) of the polyethylene composition are produced in different stages of a multistage process. Preferably, the multistage process comprises at least one gas phase stage in which, preferably, fraction (B) is produced. Further preferred, fraction (B) is produced in a subsequent stage in the presence of fraction (A) which has been produced in a previous stage.

It is previously known to produce multimodal, in particular bimodal, olefin polymers, such as multimodal polyethylene, in a multistage process comprising two or more reactors connected in series. An instance of this prior art is described in EP 517 868, including all its preferred embodiments as described therein, as a preferred multistage process for the production of the polyethylene composition according to the invention.

Preferably, the main polymerisation stages of the multistage process for producing the composition according to the invention are such as described in EP 517 868, i.e. the production of fractions (A) and (B) is carried out as a combination of slurry polymerisation for fraction (A) and gas-phase polymerisation for fraction (B). The slurry polymerisation is preferably performed in a so-called loop reactor. Further preferred, the slurry polymerisation stage precedes the gas phase stage.

Optionally and advantageously, the main polymerisation stages may be preceded by a prepolymerisation, in which case up to 20 % by weight, preferably 1 to 10 % by weight, more preferably 1 to 5 % by weight, of the total composition is produced. The prepolymer is preferably an ethylene homopolymer (High Density PE). At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end.

The polymerisation catalysts include coordination catalysts of a transition metal, such as Ziegler-Natta (ZN), metallocenes, non-metallocens, Cr-catalysts. The catalyst may be supported, e.g. with conventional supports including silica, Al-containing supports and magnesium dichloride based supports. Preferably the catalyst is a ZN catalyst, more preferably the catalyst is non-silica supported ZN catalyst, and most preferably MgCl₂-based ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention, reference is made to WO 2004055068 and WO 2004055069 of Borealis, EP 0 688 794 and EP 0 810 235. Particularly preferred Ziegler-Natta catalysts are described in EP 0 810 235. Preferably the fractions of the inventive polyethylene composition are produced using a Ziegler-Natta catalyst.

The resulting end product consists of an intimate mixture of the polymers from the two or more reactors, the different molecular-weight-distribution curves of these polymers together forming a molecular-weight-distribution curve having a broad maximum or two or more maxima, i.e. the end product is a bimodal or multimodal polymer mixture.

It is preferred that the base resin, i.e. the entirety of all polymeric constituents, of the composition according to the invention is a bimodal polyethylene mixture consisting of fractions (A) and (B), optionally further comprising a small prepolymerisation fraction in the amount as described above. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100 °C, and most preferably is 82 to 97 °C.

In the production of the composition of the present invention, preferably a compounding step is applied, wherein the composition of the base resin, i.e. the blend, which is typically obtained as a base resin powder from the reactor, is extruded in an extruder and then pelletised to polymer pellets in a manner known in the art.

Optionally, additives or other polymer components can be added to the composition during the compounding step in the amount as described above. Preferably, the composition of the invention obtained from the reactor is compounded in the extruder together with additives in a manner known in the art.

The extruder may be e.g. any conventionally used extruder. An example of an extruder for the present compounding step may be those as supplied by Japan steel works, Kobe steel or Farrel-Pomini, e.g. JSW 460P.

Still further, the present invention relates to a blow moulded article comprising a polyethylene composition as described above. Preferably, this article is a container, more preferably a bottle, preferably with a volume of less than 2 litres.

Furthermore, the invention also relates to the use of the inventive polyethylene composition described above for blow moulding, preferably of containers e.g. a bottle, preferably for food and beverages.

Blow moulding of the composition hereinbefore described may be carried out using any conventional blow moulding equipment. A typical blow moulding process may be carried out a temperature of 180 to 220 °C.

### Experimental and Examples

### 1. Definitions and measurement methods

### a) Molecular weight

The weight average molecular weight M_{w} and the molecular weight distribution (MWD = M_{w}/Mₙ wherein Mₙ is the number average molecular weight and M_{w} is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: 9.54*10⁻⁵ and a: 0.725 for PS, and K: 3.92*10⁻⁴ and a: 0.725 for PE). The ratio of M_{w} and Mₙ is a measure of the broadness of the distribution, since each is influenced by the opposite end of the "population".

### b) Density

All densities are measured according to ISO 1183/D.

### c) Melt Flow Rate/Flow Rate Ratio

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg (MFR₂), 5 kg (MFR₅) or 21.6 kg (MFR₂₁).

### d) Shear Thinning Index SHI

Dynamic rheological measurements were carried out with a rheometer, namely Rheometrics RDA-II QC, on compression moulded samples under nitrogen atmosphere at 190 °C using 25 mm diameter plates and plate geometry 1.2 mm gap. The oscillatory shear experiments were done within the linear viscosity range of strain at frequencies from 0.05 to 300 rad/s (ISO 6721-1).

The values of storage modulus (G'), loss modulus (G'') complex modulus (G*) and complex viscosity (eta*) were obtained as a function of frequency (omega). Eta(100 rad/s) is used as abbreviation for the complex viscosity at 100 rad/sec shear rate.

The shear thinning index (SHI), which is correlating with MWD and is independent of M_{w}, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

The SHI value is obtained by calculating the complex viscosities eta_{(2.7)} and eta₍₂₁₀₎ at a constant shear stress of 2.7 kPa and 210 kPa, respectively. The shear thinning index SHI_{(2.7/210)} is defined as the ratio of the two viscosities eta_{(2.7)} and eta₍₂₁₀₎.

The definitions and measurement conditions are also described in detail on page 8 line 29 to page 11, line 25 of WO 00/22040.

### e) Elasticity balance

The dynamic rheological measurements were carried out with a rheometer, namely Rheometrics RDA-II QC, on compression moulded samples under nitrogen atmosphere at 190 °C using 25 mm diameter plates and plate geometry 1.2 mm gap. The oscillatory shear experiments were done within the linear viscosity range of strain at frequencies from 0.05 to 300 rad/s (ISO 6721-1).

The resulting RDA dynamic viscosity measurements provided: storage modulus (G'), loss modulus (G"), loss tangent (tan(delta) = G"(omega)/G'(omega)), and the absolute value of complex viscosity (eta*) as a function of frequency (omega).

The loss tangent is: tan(delta) = G"(omega)/G'(omega). Thus tan(300) = G"(300)/G'(300) and tan(0.05) = G"(0.05)/G'(0.05).

The elasticity balance = tan(0.05)/ tan(300).

f) Die swell was measured at an extrudate length of 5 cm while an infrared camera measures the extrudate 3.2 cm under the die on a RH10 Advanced Capillary Rheometer from Malvern, according to ISO 11443: 1995 at 190 °C. The piston diameter was 12 mm and the piston speed 2 mm/min. The die diameter was 1 mm and the die length 5 mm. The die inlet angle was 180°, while the preheating was 10 minutes.

### g) Tensile properties

Tensile properties (E-modulus) were measured on moulded samples according to ISO 527-2:1993. The specimens were prepared according to ISO3167. The generated multipurpose test specimens, type B, were compression moulded and milled according to ISO 527-2:1993. The modulus was measured at a speed of 50 mm/min.

### 2. Examples

Polyethylene composition 1 according to the invention was produced using the following procedure:
Into a 450 dm³ loop reactor, operated at 95 °C and 58 bar, was introduced 36 kg/hour ethylene, 85 kg/hour propane, 85 g/hour hydrogen and the polymerisation catalyst *Lynx 200,* in a quantity such that PE production rate was 34 kg PE/hour. *Lynx 200* is a MgCl₂ supported titanium containing catalyst available from Engelhard Corporation Pasadena, USA.
The polymer (containing the active catalyst) was separated from the reaction medium and transferred to a gas phase reactor, operated at 85 °C and 20 bar, where additional hydrogen, ethylene and optionally 1-butene comonomer were added so as to produce a polyethylene at 61.8 kg/hour.
The reaction conditions applied and the material properties are listed in Table I. The inventive polymer was compared to a commercially available polyethylene composition: Comparative Example 1, which is a unimodal Cr-catalyst HDPE.

**Table I:**

| | Units | Example 1 |
|---|---|---|
| **loop reactor** | | |
| Temperature | °C | 95 |
| Pressure | bar | 58 |
| [C₂] | mol % | 4 |
| H₂/C₂ ratio | mol/kmol | 380 |
| MFR₂ | g/10min | 130 |
| Density | kg/m³ | > 965 |

| **gas phase reactor** | | |
|---|---|---|
| Temperature | °C | 95 |
| [C₂] | mol % | 12 |
| H₂/C₂ ratio | mol/kmol | 120 |
| C₄/C₂ ratio* | mol/kmol | 0 |
| Split | weight% | 45 |
| MFR₂ reactor | g/10min | 0.7 |

Table II describes the properties of the final polymer composition and test samples.

The tensile modulus was measured on compression moulded plaques as described in the methods section.

**Table II:**

| **Final Product** | Example 1 | Comparative Example 1 |
|---|---|---|
| MFR₂ (190°C, 2.16kg)(g/10min) | 0.7 | 0.9 |
| MFR₂₁ (190°C, 2.16kg)(g/10min) | 68 | 61 |
| MWD | 15 | 8.2 |
| Mw (kD) | 150000 | 140000 |
| Mn | 9600 | 17000 |
| Density (kg/m³) | 965 | 963 |
| SHI_{(2.7/210)} | 33 | 29 |
| Elasticity balance (tan_{(0.05)}/tan₍₃₀₀₎) | 4.03 | 2.68 |
| Die swell (mm) | 1.65 | 1.84 |
| Tensile modulus (MPa) | 1630 | 1350 |
| Bottle production on dual Graham wheel machine (bottles/min) | 300 | 240 |

The data in Table II show that the composition of the invention has a higher shear thinning index and elasticity balance than conventional unimodal HDPE used for blow moulding, but at the same time, yields blow moulded articles with far superior mechanical properties. In addition the die swell is reduced. Accordingly, the composition hereinbefore described will be easier to blow mould and will facilitate high throughputs while yielding products of superior quality and lower weight.

In order to examine the product processability, bottles were made on a Graham wheel machine. The resulting production rates on the blow moulding machine were 240 bottle/min to 300 bottles/min for the comparative and inventive materials, respectively. In addition, the inventive bottles had increased stiffness, which made it possible to reduce the bottle weight.

Thus, the number of blow moulded articles per unit time can be significantly increased, while the mechanical properties of the blow moulded articles are improved.

## Claims

1. A polyethylene composition comprising
(i) a first ethylene homopolymer fraction (A), and
(ii) a second ethylene homopolymer fraction (B),
wherein
(I) either fraction (A) and/or fraction (B) is an ethylene homopolymer with less than 0.3 mol% of a comonomer,
(II) fraction (A) has a lower average molecular weight than fraction (B), measured by a method based on ISO 16014-4:2003,
(III) fraction (A) has a MFR₂ of greater than or equal to 50 g/10min, determined according to ISO 1133,
(IV) fraction (B) has a MFR₂ of less than 50 g/10min, determined according to ISO 1133,
wherein said polyethylene composition has
(a) a MFR₂ of less than or equal to 3.0 g/10min, determined according to ISO 1133, and
(b) an elasticity balance (tan_{(0.05)}/tan₍₃₀₀₎) of greater or equal to 2.8,
(c) a density of 960 kg/m³ or higher, measured according to ISO 1183/D, and
(d) a molecular weight distribution MWD of 10 to 30, measured by a method based on ISO 16014-4:2003.

2. A polyethylene composition according to any claim 1, wherein the first fraction (A) is present in 20 to 80 wt.%, and/or the second fraction (B) is present in 80 to 20 wt.%, based on the total weight of the polyethylene composition.

3. A polyethylene composition according to any of the preceding claims, wherein fraction (A) has a MFR₂ of less than or equal to 500 g/10 min and/or fraction (B) has an MFR₂ of greater than or equal to 0.01 g/10min, determined according to ISO 1133.

4. A polyethylene composition according to any of the previous claims, wherein the MFR₂₁ of the composition is greater or equal to 4 g/10min, determined according to ISO 1133.

5. A polyethylene composition according to any of the previous claims, wherein the composition is multimodal with regard to its molecular weight distribution curve.

6. A polyethylene composition according to any of the previous claims, wherein the composition has a shear thinning index SHI_{(2.7/210)} of greater or equal to 30.

7. A polyethylene composition according to any of the previous claims, wherein the elasticity balance (tan(0.05)/tan(300)) of the composition is greater or equal to 3.0.

8. A polyethylene composition according to any of the previous claims, wherein the die swell is less than or equal to 1.8 mm.

9. A polyethylene composition according to any of the previous claims, wherein the tensile modulus is greater of equal to 1300 MPa, measured according to ISO 527-2:1993.

10. A polyethylene composition according to any of the preceding claims, wherein the fractions of the composition are produced in different stages of a multistage process.

11. A polyethylene composition according to any of the preceding claims, wherein the fractions of the composition are produced using a Ziegler-Natta catalyst.

12. A blow moulded article, comprising the polyethylene composition according to any of the previous claims.

13. The blow moulded article according to claim 12, wherein the article is a container or a bottle.

14. Use of the polyethylene composition according to any of claims 1 to 11 for blow moulding.

## Patentansprüche

1. Polyethylenzusammensetzung, umfassend:
(i) einen ersten Anteil (A) aus einem Ethylenhomopolymer und
(ii) einen zweiten Anteil (B) aus einem Ethylenhomopolymer,
wobei
(I) entweder der Anteil (A) und/oder der Anteil (B) ein Ethylenhomopolymer mit weniger als 0,3 Mol-% eines Comonomers ist,
(II) der Anteil (A) ein geringeres durchschnittliches Molekulargewicht als der Anteil (B) aufweist, und zwar nach einem Verfahren gemessen, das auf ISO 16014-4:2003 basiert;
(III) der Anteil (A) einen MFR₂-Wert von mehr als oder gleich 50 g/10 min aufweist, und zwar gemäß ISO 1133 gemessen;
(IV) der Anteil (B) einen MFR₂-Wert von mehr als 50 g/10 min aufweist, und zwar gemäß ISO 1133 gemessen;
wobei die Polyethylenzusammensetzung folgendes aufweist
(a) einen MFR₂-Wert von weniger als oder gleich 3,0 g/10 min, und zwar gemäß ISO 1133 bestimmt, und
(b) ein Elastizitätsgleichgewicht (tan_{(0,05)}/tan₍₃₀₀₎) von mehr als oder gleich 2,8;
(c) eine Dichte von 960 kg/m³ oder mehr, und zwar gemäß ISO 1183/D gemessen; und
(d) eine Molekulargewichtsverteilung MWD von 10 bis 30 und zwar nach einem Verfahren gemessen, das auf ISO 16014-4:2003 basiert.

2. Polyethylenzusammensetzung nach Anspruch 1, wobei der erste Anteil (A) mit 20 bis 80 Gew.-% vorliegt und/oder der zweite Anteil (B) mit 80 bis 20 Gew.-% vorliegt, und zwar auf das Gesamtgewicht der Polyethylenzusammensetzung bezogen.

3. Polyethylenzusammensetzung nach einem der vorstehenden Ansprüche, wobei der Anteil (A) einen MFR₂-Wert von weniger als oder gleich 500 g/10 min aufweist und/oder der Anteil (B) einen MFR₂-Wert von mehr als oder gleich 0,01 g/10 min aufweist, und zwar gemäß ISO 1133 bestimmt.

4. Polyethylenzusammensetzung nach einem der vorstehenden Ansprüche, wobei der MFR₂₁-Wert der Zusammensetzung größer als oder gleich 4 g/10 min ist, und zwar gemäß ISO 1133 bestimmt.

5. Polyethylenzusammensetzung nach einem der vorstehenden Ansprüche, wobei die Zusammensetzung in bezug auf ihrer Kurve der Molekulargewichtsverteilung multimodal ist.

6. Polyethylenzusammensetzung nach einem der vorstehenden Ansprüche, wobei die Zusammensetzung einen Strukturviskositätsindex SHI_{(2,7/210)} von mehr als oder gleich 30 aufweist.

7. Polyethylenzusammensetzung nach einem der vorstehenden Ansprüche, wobei das Elastizitätsgleichgewicht (tan_{(0,05)}/tan₍₃₀₀₎) der Zusammensetzung mehr als oder gleich 3,0 beträgt.

8. Polyethylenzusammensetzung nach einem der vorstehenden Ansprüche, wobei die Volumenzunahme in der Form weniger als oder gleich 1,8 mm beträgt.

9. Polyethylenzusammensetzung nach einem der vorstehenden Ansprüche, wobei der Zugmodul mehr als oder gleich 1300 MPa beträgt, und zwar gemäß ISO 527-2:1993 gemessen.

10. Polyethylenzusammensetzung nach einem der vorstehenden Ansprüche, wobei die Anteile der Zusammensetzung in unterschiedlichen Stufen eines mehrstufigen Verfahrens erzeugt sind.

11. Polyethylenzusammensetzung nach einem der vorstehenden Ansprüche, wobei die Anteile der Zusammensetzung unter Verwendung eines Ziegler-Natta-Katalysators erzeugt sind.

12. Blasgeformter Gegenstand, umfassend die Polyethylenzusammensetzung nach einem der vorstehenden Ansprüche.

13. Blasgeformter Gegenstand nach Anspruch 12, wobei der Gegenstand ein Behälter oder eine Flasche ist.

14. Verwendung der Polyethylenzusammensetzung nach einem der Ansprüche 1 bis 11 zum Blasformen.

## Revendications

1. Composition de polyéthylène comprenant
(i) une première fraction d'homopolymère d'éthylène (A), et
(ii) une deuxième fraction d'homopolymère d'éthylène (B),
où
(I) soit la fraction (A) et/ou la fraction (B) est un homopolymère d'éthylène avec moins de 0,3 % en mole d'un comonomère,
(II) la fraction (A) possède une masse moléculaire moyenne inférieure à celle de la fraction (B), mesurée par une méthode basée sur la norme ISO 16 014-4 : 2003,
(III) la fraction (A) présente un MFR₂ supérieur à ou égal à 50 g/10 min, déterminé selon la norme ISO 1133,
(IV) la fraction (B) présente un MFR₂ inférieur à 50 g/10 min, déterminé selon la norme ISO 1133,
où ladite composition de polyéthylène possède
(a) un MFR₂ inférieur à ou égal à 3,0 g/10 min, déterminé selon la norme ISO 1133, et
(b) un rapport d'élasticité (tan_{(0,05)}/tan₍₃₀₀₎) supérieur ou égal à 2,8,
(c) une masse volumique de 960 kg/m³ ou plus, mesurée selon la norme ISO 1183/D, et
(d) une distribution de masse moléculaire MWD de 10 à 30, mesurée par une méthode basée sur la norme ISO 16014-4 : 2003.

2. Composition de polyéthylène selon la revendication 1, où la première fraction (A) est présente à 20 % à 80 % en poids, et/ou la deuxième fraction (B) est présente à 80 % à 20 % en poids, par rapport à la masse totale de la composition de polyéthylène.

3. Composition de polyéthylène selon l'une quelconque des revendications précédentes, où la fraction (A) présente un MFR₂ inférieur à ou égal à 500 g/10 min et/ou la fraction (B) présente un MFR₂ supérieur à ou égal à 0,01 g/10 min, déterminé selon la norme ISO 1133.

4. Composition de polyéthylène selon l'une quelconque des revendications précédentes, où le MFR₂₁ de la composition est supérieur ou égal à 4 g/10 min, selon la norme ISO 1133.

5. Composition de polyéthylène selon l'une quelconque des revendications précédentes, où la composition est multimodale par rapport à sa courbe de distribution de masse moléculaire.

6. Composition de polyéthylène selon l'une quelconque des revendications précédentes, où la composition possède un indice de fluidification par cisaillement SHI(_{2,7/210}) supérieur ou égal à 30.

7. Composition de polyéthylène selon l'une quelconque des revendications précédentes, où le rapport d'élasticité (tan_{(0,05)}/tan₍₃₀₀₎) de la composition est supérieur ou égal à 3,0.

8. Composition de polyéthylène selon l'une quelconque des revendications précédentes, où le gonflement de la paraison est inférieur ou égal à 1,8 mm.

9. Composition de polyéthylène selon l'une quelconque des revendications précédentes, où le module de traction est supérieur ou égal à 1300 MPa, mesuré selon la norme ISO 527-2 : 1993.

10. Composition de polyéthylène selon l'une quelconque des revendications précédentes, où les fractions de la composition sont produites dans des stades différents d'un procédé à stades multiples.

11. Composition de polyéthylène selon l'une quelconque des revendications précédentes, où les fractions de la composition sont produites en utilisant un catalyseur de Ziegler -Natta.

12. Article moulé par soufflage comprenant la composition de polyéthylène selon l'une quelconque des revendications précédentes.

13. Article moulé par soufflage selon la revendication 12, où l'article est un récipient ou une bouteille.

14. Utilisation d'une composition de polyéthylène selon l'une quelconque des revendications 1 à 11 pour le moulage par soufflage.
